# EUROPÄISCHE PATENTSCHRIFT

(11) **EP 0 794 091 B1**
(45) Veröffentlichungstag und Bekanntmachung des Hinweises auf die Patenterteilung: **16.05.2001**
(21) Anmeldenummer: 97103488.9
(22) Anmeldetag: 04.03.1997
(51) Int. Cl.: B60R 21/20

(54) **Gassack-Rückhaltemodul**
Air bag restraint module
Module pour sac gonflable de retenue

(30) Priorität: 08.03.1996 DE 29604345 U
(43) Veröffentlichungstag der Anmeldung: 10.09.1997
(73) Patentinhaber: TRW Occupant Restraint Systems GmbH & Co. KG, 73551 Alfdorf (DE)
(72) Erfinder: Disam, Wolfgang, 73568 Durlangen (DE); Lutz, Joachim, 73579 Schechingen (DE)
(74) Vertreter: Degwert, Hartmut, Dipl.-Phys.

(56) Entgegenhaltungen:
- EP-A- 0 558 240
- EP-A- 0 609 959
- EP-A- 0 620 139
- EP-A- 0 680 851
- EP-A- 0 761 506
- WO-A-94/25313
- DE-U- 29 604 345
- US-A- 5 263 739

## Beschreibung

Die Erfindung bezieht sich auf ein Gassack-Rückhaltemodul gemäß dem Oberbegriff des Anspruchs 1.

Solche Gassack-Rückhaltemodule sind dem Fachmann auf dem Gebiet der Fahrzeuginsassen-Sicherheitstechnik bekannt. Üblicherweise wird als Aufblasvorrichtung ein sogenannter Gasgenerator mit einer pyrotechnischen Ladung verwendet, die nach Aktivierung in sehr kurzer Zeit ein vorbestimmtes Gasvolumen freisetzt. In jüngster Zeit werden jedoch vermehrt Anstrengungen unternommen, Gassack-Rückhaltemodule zu schaffen, die mit einer deutlich kleineren pyrotechnischen Ladung arbeiten, da deren Verwendung insbesondere hinsichtlich der Umweltverträglichkeit nicht problemlos ist. Durch die Erfindung wird ein Gassack-Rückhaltemodul der eingangs genannten Art bereitgestellt, der an die Verwendung einer Aufblasvorrichtung angepaßt ist, die einen Druckgasbehälter aufweist, insbesondere vom Typ "Heated Gas Inflator". Bei einer solchen Aufblasvorrichtung wird für das Entfalten des Gassacks ein vorbestimmtes Volumen von Gas freigesetzt, das in der Druckgasflasche unter einem hohen Druck eingeschlossen war. Bei der Aktivierung wird in der Aufblasvorrichtung zusätzlich eine chemische Reaktion des in dem Druckgasbehälter enthaltenen Gases eingeleitet, wodurch es zu einer Zunahme der Temperatur des freigesetzten Gases und somit zu einer Zunahme dessen Volumens kommt.

In der europäischen Offenlegungsschrift EP 0 558 240 A1 ist ein Gassack-Rückhaltemodul der eingangs genannten Art mit einem Gehäuse, einer in diesem angeordneten Aufblasvorrichtung und einem Gassack beschrieben. Das Gehäuse weist ein wannenartiges Aufnahmeteil auf, das als Abschnitt eines Strangpreßprofils oder als Blechbiegeteil ausgeführt sein kann. Als Aufblasvorrichtung ist ein pyrotechnischer Gasgenerator vorgesehen. Die Befestigungsabschnitte des Gassacks werden zwischen Befestigungsstreifen am Aufnahmeteil und einem aufgeschraubten Diffusor eingeklemmt. Die offenen Stirnseiten des wannenförmigen Aufnahmeteils werden durch Flansche des Gasgenerators oder durch aufgeschraubte Endkappen verschlossen.

Mit der Erfindung soll die Montage der Aufblasvorrichtung vereinfacht werden.

Erfindungsgemäß ist hierzu ein Gassack-Rückhaltemodul der eingangs genannten Art vorgesehen, das die Merkmale des kennzeichnenden Teils des Anspruchs 1 aufweist.

Durch eine solche Ausgestaltung des Gassack-Rückhaltemoduls sind die Voraussetzungen für eine besonders einfache und sichere Montage geschaffen.

Vorzugsweise ist vorgesehen, daß das Gehäuse mit dem Druckgasbehälter einerseits und der Befestigungsrahmen mit dem gefalteten Gassack andererseits zwei vormontierte Baugruppen bilden. Durch die Unterteilung des Gassack-Rückhaltemoduls in zwei Baugruppen, die getrennt vormontierbar sind, ergeben sich weitere Vorteile bei der Montage.

Vorteilhafte Ausgestaltungen der Erfindung sind in den Unteransprüchen angegeben.

Die Erfindung wird nachfolgend unter Bezugnahme auf zwei Ausführungsformen beschrieben, die in der beigefügten Zeichnung dargestellt sind. In dieser zeigen:
- Fig. 1 eine schematische Draufsicht auf ein Gehäuse mit eingesetztem Druckgasbehälter gemäß einer ersten, lediglich beispielhaften Ausführungsform des Gassack-Rückhaltemoduls, die kein Teil der Erfindung ist;
- Fig. 2 einen schematischen Querschnitt entlang der Linie II-II von Fig. 1;
- Fig. 3 einen schematischen Querschnitt entlang der Linie III-III von Fig. 1, in dem eine erste Variante des Gehäuses dargestellt ist;
- Fig. 4 einen schematischen Querschnitt entlang der Linie III-III von Fig. 1, in dem eine zweite Variante des Gehäuses dargestellt ist;
- Fig. 5 eine schematische Draufsicht auf den Befestigungsrahmen;
- Fig. 6 einen schematischen Querschnitt durch den mit dem Befestigungsabschnitt versehenen Gassack;
- Fig. 7 eine perspektivische Ansicht eines zusammengefalteten Gassacks gemäß einer ersten Variante;
- Fig. 8 eine perspektivische Ansicht eines zusammengefalteten Gassacks gemäß einer zweiten Variante;
- Fig. 9 eine schematische Draufsicht auf das Gehäuse gemäß der ersten Ausführungsform, in dem der Druckgasbehälter angeordnet und auf dem der Befestigungsrahmen ohne Gassack montiert ist;
- Fig. 10 einen schematischen Längsschnitt durch den montierten Gassack-Rückhaltemodul gemäß der ersten Ausführungsform;
- Fig. 11 einen schematischen Querschnitt durch den montierten Gassack-Rückhaltemodul gemäß der ersten Ausführungsform;
- Fig. 12 einen schematischen Querschnitt durch eine erste Variante des Gehäuses eines Gassack-Rückhaltemoduls gemäß einer zweiten, lediglich beispielhaften Ausführungsform, die kein Teil der Erfindung ist;
- Fig. 13 einen schematischen Querschnitt durch einen Gassack-Rückhaltemodul gemäß der zweiten Ausführungsform mit dem Gehäuse von Fig. 12;
- Fig. 14 einen schematischen Querschnitt durch eine Variante des Gehäuses von Fig. 12;
- Fig. 15 einen schematischen Querschnitt durch einen Gassack-Rückhaltemodul gemäß der zweiten Ausführungsform mit einem Gehäuse gemäß einer zweiten Variante;
- Fig. 16 in einer vergrößerten Perspektivansicht ein Detail des Gehäuses von Fig. 15;
- Fig. 17 eine Vorderansicht des Details von Fig. 16;
- Fig. 18 eine Explosionsansicht eines Gassack-Rückhaltemoduls einer erfindungsgemäßen Ausführungsform mit einem Gehäuse gemäß einer dritten Variante;
- Fig. 19 eine schematische Draufsicht auf einen Befestigungsrahmen, der anstelle des Befestigungsrahmens und des Ablenkblechs des Gassack-Rückhaltemoduls von Fig. 18 verwendet werden kann;
- Fig. 20 einen schematischen Querschitt entlang der Linie A-A von Fig. 19;
- Fig. 21 einen schematischen Querschitt entlang der Linie B-B von Fig. 19;
- Fig. 22 eine perspektivische Ansicht eines Details von Fig. 18;
- Fig. 23 eine perspektivische Ansicht einer Variante der Halteplatte, die anstelle der Halteplatte des Gassack-Rückhaltemoduls von Fig. 18 verwendet werden kann;
- Fig. 24 eine perspektivische Ansicht einer weiteren Variante der Halteplatte, die anstelle der Halteplatte des Gassack-Rückhaltemoduls von Fig. 18 verwendet werden kann; und
- Fig. 25 in einem Längsschnitt ein weiteres Detail des Gehäuses des Gassack-Rückhaltemoduls von Fig. 18.

Das Gassack-Rückhaltemodul besteht aus zwei getrennt vormontierbaren Baugruppen, von denen die erste das Gehäuse mit dem Druckgasbehälter und die zweite der Gassack mit seinem Befestigungsrahmen ist.

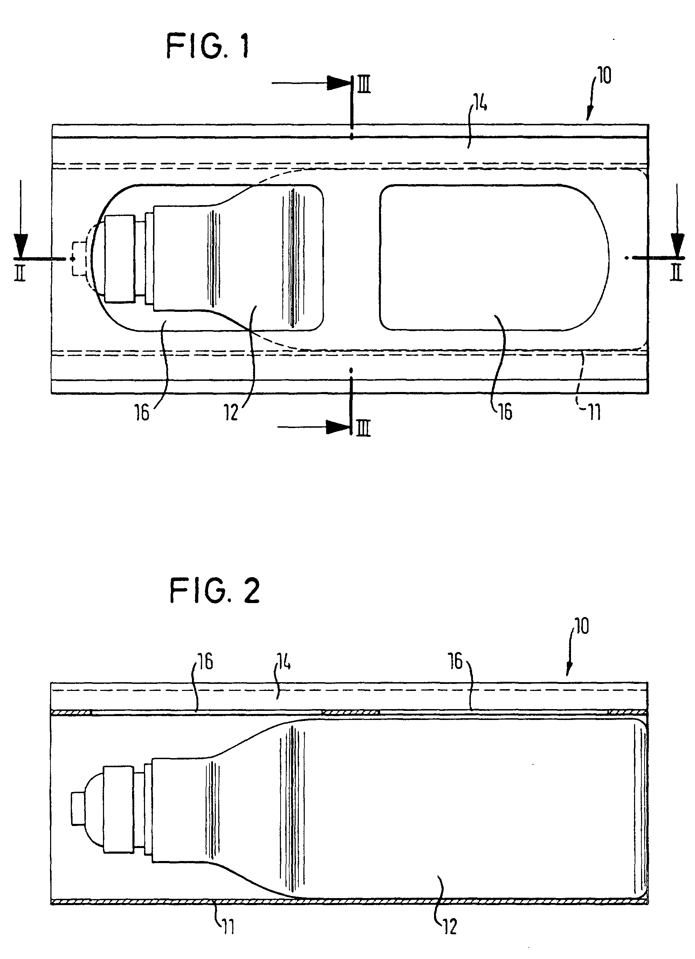

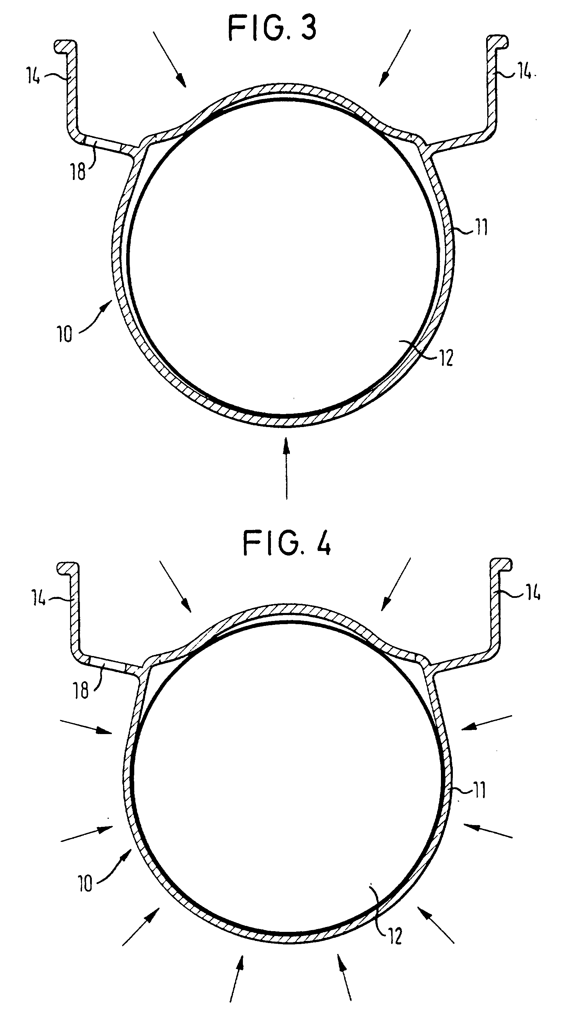

In den Figuren 1 bis 11 ist schematisch zur Erläuterung eine erste Ausführungsform eines Gehäuse 10 eines Gassack-Rückhaltemoduls dargestellt. Dieses Gehäuse 10 weist einen allgemein zylindrischen Aufnahmeteil 11 auf, in dem ein Druckgasbehälter 12 in axialer Richtung eingeschoben ist, sowie zwei in axialer Richtung verlaufende, sich ausgehend von dem Aufnahmeteil 11 nach außen erstreckende Befestigungsstreifen 14. Zwischen den Befestigungsstreifen 14 sind in dem Aufnahmeteil 11 zwei Durchgangsöffnungen 16 ausgebildet. Wie in den Figuren 3 und 4 zu sehen ist, ist jeder Befestigungsstreifen 14 zweifach abgekantet, so daß zwischen den in den Figuren 3 und 4 senkrecht nach oben abstehenden Abschnitten der Befestigungsstreifen 14 ein Aufnahmeraum ausgebildet ist. In dem an den Aufnahmeteil 11 angrenzenden Abschnitt der Befestigungsstreifen 14 sind mehrere Befestigungslöcher 18 ausgebildet.

Die Druckgasflasche 12 enthält unter Druck stehendes Gas, das nach Zündung einer pyrotechnischen Hilfsladung zur Aktivierung des Gassack-Rückhaltemoduls aus dieser im Bereich des Kopfs ausströmt. Ferner wird bei der Aktivierung eine chemische Reaktion des Druckgases eingeleitet, die zu einer Zunahme der Temperatur des freigesetzten Gases und somit zu einer Zunahme seines Volumens führt.

Die Druckgasflasche 12 ist in dem Aufnahmeteil 11 mittels Preßsitz gehalten. Zur Erhaltung dieses Preßsitzes werden zwei Varianten bevorzugt, von denen die erste in Fig. 3 dargestellt ist. Gemäß dieser Variante des Gehäuses 10 hat das Aufnahmeteil 11 einen polygonartigen Querschnitt, so daß der Preßsitz zwischen den Abschnitten des Aufnahmeteils 11 mit dem geringsten radialen Abstand von der Mittellängsachse und der Wandung der Druckgasflasche gebildet ist. Die Berührstellen zwischen dem Aufnahmeteil 11 und der Druckgasflasche 12 sind durch Pfeile gekennzeichnet.

In Fig. 4 ist eine zweite Variante der Ausgestaltung des Gehäuses 10 dargestellt. Gemäß diesem Beispiel weist das Aufnahmeteil 11 einen im wesentlichen kreisförmigen Querschnitt auf, so daß sich eine Berührung zwischen der Wandung des Aufnahmeteils 11 und der Wandung der Druckgasflasche 12 entlang einem großen Oberflächenbereich der Druckgasflasche 12 ergibt. Auch in dieser Figur sind die Bereiche der Berührung zwischen dem Aufnahmeteil 11 und der Druckgasflasche 12 durch Pfeile gekennzeichnet.

Bei den beiden in den Figuren 3 und 4 gezeigten Varianten des Aufnahmeteils 11 sind dessen Abmessungen so auf die Abmessungen der Druckgasflasche 12 abgestimmt, daß die Druckgasflasche 12 für ihre Montage in dem Aufnahmeteil 11 unter Kraftaufwendung in das Innere des Aufnahmeteils 11 eingeschoben wird. Dieses Einschieben beginnt vorzugsweise mit dem kopfseitigen Ende der Druckgasflasche 12, so daß der sanfte Übergang zwischen dem Kopf der Druckgasflasche und deren Mantelfläche den Beginn des Einschiebens erleichtert. Die sich bei der Montage der Druckgasflasche 12 ergebende Preßpassung gewährleistet einen festen Sitz der Druckgasflasche 12 in dem Aufnahmeteil 11, ohne daß weitere Mittel zur Festlegung der Druckgasflasche 12 notwendig sind. Nach dem Einbringen der Druckgasflasche 12 in das Gehäuse 10 ist die erste Baugruppe vormontiert.

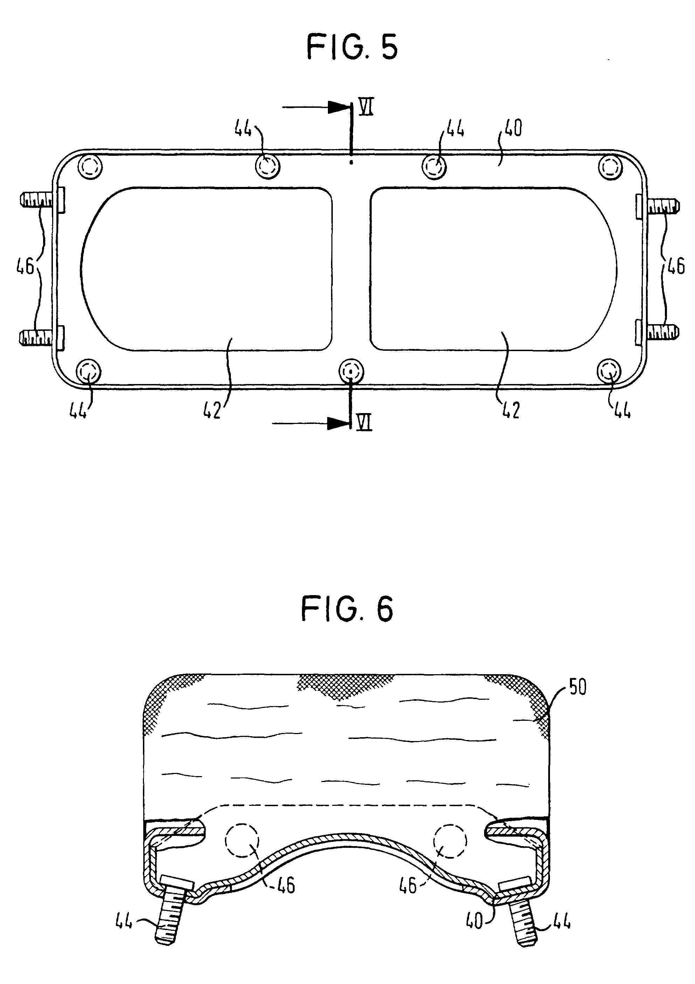

In Fig. 5 ist schematisch ein Befestigungsrahmen 40 dargestellt, der für die Befestigung eines Gassacks 50 an dem Gehäuse 10 vorgesehen ist. Der Befestigungsrahmen 40 weist eine allgemein rechteckige Form auf, und er ist entlang seiner Längsmittellinie mit zwei Durchgangsöffnungen 42 versehen. Entlang dem Umfangsrand des Befestigungsrahmens 40 sind Befestigungsbolzen 44 bzw. 46 vorgesehen, von denen sich einige, nämlich die Befestigungsbolzen 44, senkrecht zur Zeichenebene von Fig. 5 erstrecken, während andere, nämlich die Bolzen 46, sich in der Zeichenebene dieser Figur erstrecken. Der Befestigungsrahmen 40 wird zusammen mit dem Befestigungsbolzen 44 bzw. 46 so in das Innere des Gassacks 50 eingelegt, daß sich die Befestigungsbolzen durch Öffnungen in dem Gassack hindurch erstrecken, die in einem eine Einblasöffnung des Gassacks 50 umgebenden Befestigungsabschnitt ausgebildet sind. Auf diese Weise wird der Befestigungsrahmen 40 relativ zu dem Gassack 50 genau fixiert. Anschließend wird der Gassack 50 über dem Befestigungsrahmen 40 so zusammengefaltet, daß er eine kompakte Gestalt aufweist und seitlich im wesentlichen nicht über den Außenrand des Befestigungsrahmens 40 hinaussteht. In diesem zusammengefalteten Zustand wird der Gassack 50 fixiert, so daß er sich bei der weiteren Handhabung der aus ihm und dem Befestigungsrahmen 40 bestehenden Baugruppe nicht wieder entfalten kann. Ein Querschnitt durch einen zusammengefalteten Gassack 50 und den dazugehörigen Befestigungsrahmen 40 ist in Fig. 6 dargestellt.

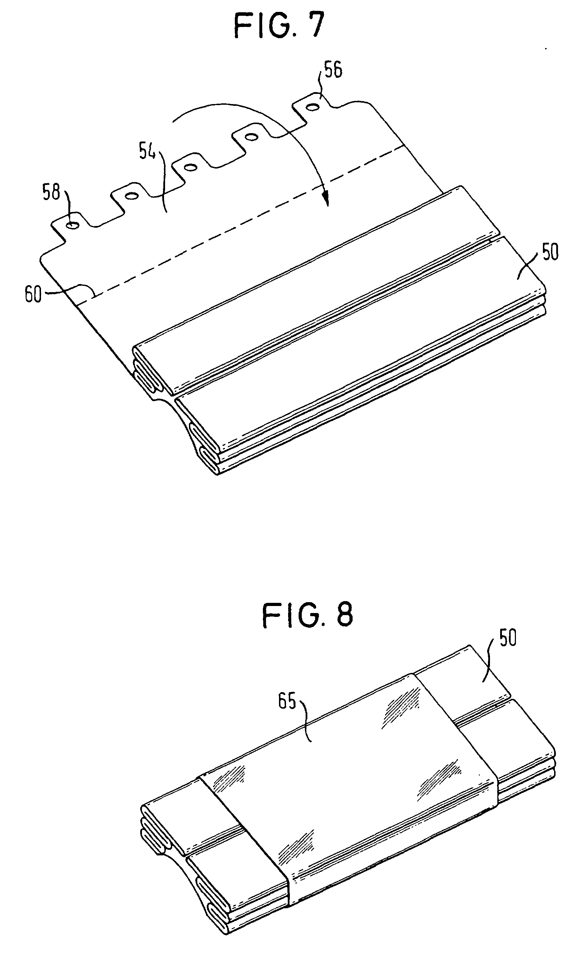

In den Figuren 7 und 8 sind zwei Varianten für das Fixieren des Gassacks in der zusammengelegten Form dargestellt. Bei der in Fig. 7 dargestellten Variante weist der Gassack 50 ein rechteckiges Fixierungsteil 54 auf, dessen eine Längsseite fest mit dem Gassack 50 verbunden ist; vorzugsweise ist es mit dem Gassack 50 vernäht. Die andere Längsseite des Fixierungsteils 54 ist mit Laschen 56 versehen, in denen Öffnungen 58 ausgebildet sind. Der zwischen den beiden Längsseiten liegende Mittelabschnitt des Fixierungsteils 54 ist mit einer Perforationslinie 60 versehen. Wenn der Gassack in die gewünschte, kompakte Gestalt zusammengefaltet ist, wird das Fixierungsteil über den Gassack geschlagen, und die Öffnungen 58 der Laschen 56 werden in die Befestigungsbolzen 44 eingehängt, so daß der Gassack 50 fixiert ist. Durch die Perforation 60 ist eine Aufreißlinie vorgegeben, entlang der das Fixierungsteil 54 bei einer Aktivierung des Gassack-Rückhaltemoduls aufreißt und den Gassack freigibt. Wenn der Gassack 50 auf diese Weise fixiert ist, kann die aus dem Gassack und dem Befestigungsrahmen 40 bestehende Baugruppe problemlos gehandhabt werden, insbesondere für die Montage an dem vormontierten Gehäuse 10.

Bei der in Fig. 8 dargestellten Variante wird der Gassack 50 von einer dem Fachmann bekannten Banderole 65 in dem zusammengefalteten, kompakten Zustand gehalten. Diese Banderole 65 kann aus einem Kunststoffmaterial oder einem anderen geeigneten Material bestehen, beispielsweise Textilgewebe.

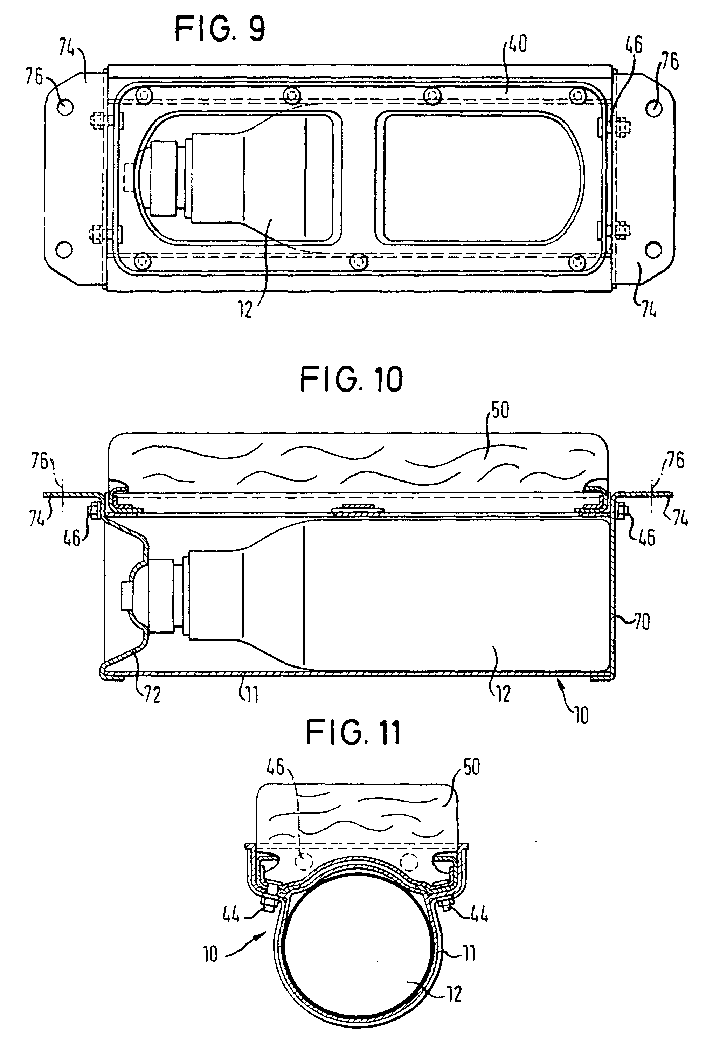

In den Figuren 9 bis 11 ist schließlich das Gassack-Rückhaltemodul gemäß der ersten Ausführungsform dargestellt, nachdem die aus dem Gehäuse 10 und der Druckgasflasche 12 bestehende Baugruppe mit der aus dem Gassack 50 und dem Befestigungsrahmen 40 bestehenden Baugruppe zusammengefügt ist. Der Befestigungsrahmen 40 ist zusammen mit dem Gassack 50 so auf das Gehäuse 10 aufgesetzt, daß sich die Befestigungsbolzen 44 durch die Öffnungen 18 hindurch erstrecken, die in den Befestigungsstreifen 14 ausgebildet sind. Auf die freien Enden der Befestigungsbolzen 44 ist jeweils eine Mutter aufgeschraubt. Die dem Boden des Druckgasbehälters 12 zugewandte Stirnseite des Aufnahmeteils 11 ist mittels einer Bodenplatte 70 verschlossen, die mit Öffnungen versehen ist, durch die sich die Befestigungsbolzen 46 hindurch erstrecken. Die dem Kopf des Druckgasbehälters 12 zugewandte Stirnseite des Aufnahmeteils 11 ist mittels einer Halteplatte 72 verschlossen, die ebenfalls mit Öffnungen versehen ist, durch die sich die Befestigungsbolzen 46 hindurch erstrecken. Auf die freien Enden der Befestigungsbolzen 46 ist jeweils eine Mutter aufgeschraubt, die vorzugsweise von demselben Typ wie die Muttern sind, die auf die Befestigungsbolzen 44 aufgeschraubt sind. Alternativ können in den Befestigungsrahmen eingepreßte Haltemuttern verwendet werden, in die von außen Befestigungsschrauben eingeschraubt werden. Die Halteplatte 72 ist mit einem Halteabschnitt versehen, der an die Gestalt des Kopfs angepaßt ist. Ferner weist der Halteabschnitt eine Öffnung auf, in die ein Ansatz des Kopfs der Druckgasflasche 12 eingreift. Dies ist insbesondere in Fig. 10 zu sehen. Die Bodenplatte 70 und die Halteplatte 72 sind jeweils mit einem Flansch 74 mit Bohrungen 76 versehen, der für eine Montage des Gassack-Rückhaltemoduls in einem Fahrzeug vorgesehen ist.

Durch die Gestaltung des Gassack-Rückhaltesystems ergeben sich verschiedene Vorteile hinsichtlich der Fertigung und der Montage der einzelnen Bauteile. Das Gehäuse 10 ist vorzugsweise ausgehend von einem Strangpreßprofil hergestellt. Dadurch ergibt sich eine besonders einfache Herstellung, da abgesehen von dem Ausbilden der Bohrungen 18 in den Befestigungsstreifen 14 und dem längengerechten Abschneiden des Strangpreßprofils keinerlei Bearbeitungsschritte notwendig sind. Durch den Preßsitz zwischen dem Aufnahmeteil 11 und der Druckgasflasche 12 wird diese in besonders einfacher Weise in dem Gehäuse 10 gehalten. Obwohl eigentlich keinerlei zusätzliche Mittel zur Festlegung der Druckgasflasche 12 notwendig sind, wird durch die Bodenplatte 70 und die Halteplatte 72 die Sicherheit der Festlegung der Druckgasflasche 12 gesteigert. Ferner dienen die Bodenplatte 70 und die Halteplatte 72, wenn keine externe Abdichtung des Gehäuses 10 vorgesehen ist, als Dichtungen für das Gehäuse 10, so daß ein abgeschlossener Raum gebildet ist, in den das Druckgas der Druckgasquelle 12 ausströmen kann. Die in dem Befestigungsrahmen 40 angebrachten Befestigungsbolzen 44 bzw. 46 dienen neben der Befestigung des Befestigungsrahmens 40 am Gehäuse 10 und der Befestigung der Bodenplatte 70 bzw. der Halteplatte 72 auch der Fixierung des Gassacks 50. Schließlich ist das erfindungsgemäße Gassack-Rückhaltemodul in zwei voneinander getrennten Baugruppen vormontierbar, die in besonders einfacher Weise handhabbar sind, ohne daß zusätzliche Sicherungen während der Handhabung notwendig sind.

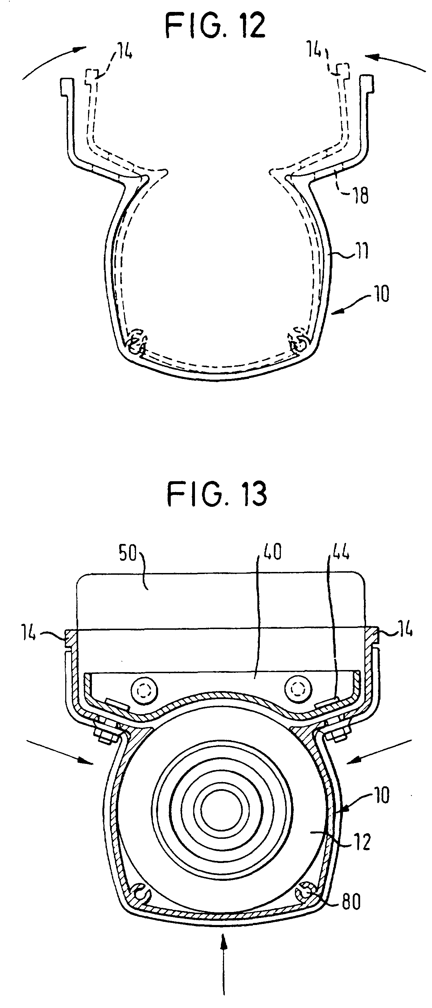

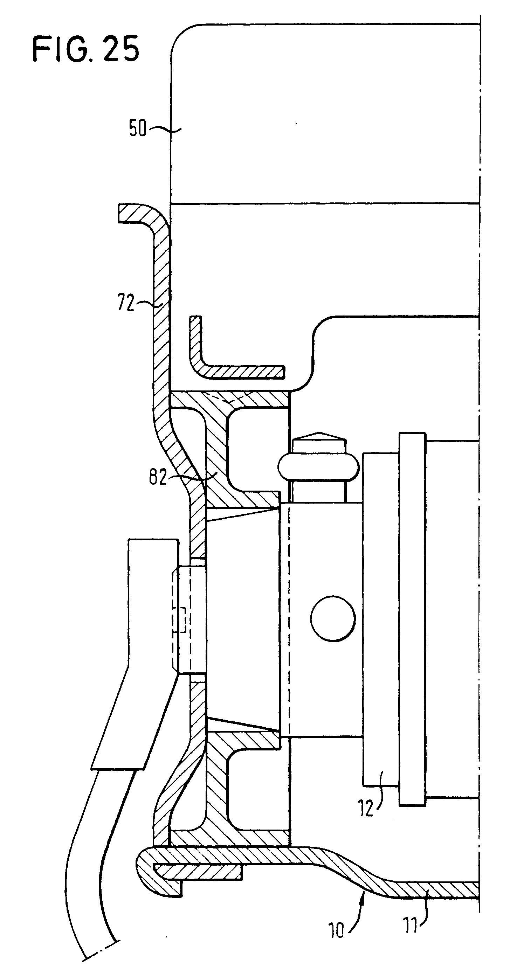

In den Figuren 12 bis 25 ist schematisch eine zweite Ausführungsform eines Gassack-Rückhaltemoduls dargestellt. Dieses unterscheidet sich von der ersten Ausführungsform im wesentlichen nur dadurch, daß der Aufnahmeteil 11 eine wannenartige, zum Gassack und stirnseitig geöffnete Gestalt hat, sich die Durchgangsöffnung 16 also entlang der gesamten Länge des Gehäuses 10 erstreckt. Soweit Bauelemente des Gassack-Rückhaltemoduls gemäß der zweiten Ausführungsform Bauelementen entsprechen, die von dem Gassack-Rückhaltemodul gemäß der ersten Ausführungsform bekannt sind, werden dieselben Bezugszeichen verwendet, und hinsichtlich der Beschreibung dieser Bauelemente wird auf die Erläuterungen zu den Figuren 1 bis 11 Bezug genommen.

Aufgrund der wannenartigen Gestalt des Aufnahmeteils 11 ist das Gehäuse elastisch, so daß die beiden Schenkel, an die sich die Befestigungsstreifen 14 anschließen, relativ zueinander bewegbar sind. Die Abmessungen der Druckgasflasche 12 und des Aufnahmeteils 11 sind so aneinander angepaßt, daß die Druckgasflasche leicht in den Aufnahmeteil 11 eingeschoben werden kann, wenn die Befestigungsstreifen aus der in Fig. 12 gestrichelt dargestellten Ausgangslage voneinander entfernt werden. Nachdem die Druckgasflasche 12 in den Aufhahmeteil 11 eingebracht ist, werden die Befestigungsstreifen 14 wieder freigegeben, und sie suchen aufgrund der Elastizität des Materials des Gehäuses 10, wieder in die Ausgangslage zurückzukehren. Dies ist in Fig. 12 durch die Pfeile dargestellt. Der Außendurchmesser der Druckgasflasche 12 ist größer als der Innendurchmesser des Aufnahmeteils 11 in der Ausgangslage gewählt, so daß die Druckgasflasche 12 in dem Aufnahmeteil 11 aufgrund der sich ergebenden Vorspannung festgelegt ist. Nun ist die erste Baugruppe komplett.

Anschließend kann die zweite Baugruppe, deren Gestaltung sich nicht von der oben beschriebenen Gestaltung unterscheidet, auf die erste Baugruppe aufgesetzt werden. Die Befestigung der beiden Baugruppen aneinander unterscheidet sich von den obigen Erläuterungen nur dadurch, daß aufgrund der Abmessungen der beiden Baugruppen relativ zueinander beim Verschrauben der zweiten Baugruppe an der ersten Baugruppe eine Spannkraft erzeugt wird, welche die beiden Befestigungsstreifen 14 weiter der Ausgangslage anzunähern sucht. Dadurch wird auf die Druckgasflasche eine Spannwirkung ausgeübt, welche durch die drei Pfeile in Fig. 13 symbolisiert ist. Die zweite Baugruppe wirkt mit der ersten Baugruppe zusammen wie eine Rohrschelle, in deren Inneren die Druckgasflasche 12 eingespannt ist. Aufgrund des polygonartigen Querschnitts des Aufnahmeteils 11 und der Form des Befestigungsrahmens 40 übt dieser keinen direkten Druck auf die Druckgasquelle aus. Je nach Art der gewünschten Klemmung zwischen dem Aufnahmeteil 11 und der Druckgasquelle 12 kann für das Aufnahmeteil 11 auch ein solches polygonartiges Profil gewählt werden, daß der Befestigungsrahmen 40 die Druckgasquelle 12 berührt und diese zusammen mit dem Aufnahmeteil 11 festlegt, oder ein kreisförmiges Profil, so daß sich zwischen dem Aufnahmeteil 11 und dem Befestigungsrahmen 40 auf der einen Seite und der Druckgasquelle 12 auf der anderen Seite eine flächige Klemmwirkung ergibt.

Die in den Figuren 12 und 13 dargestellte erste Variante des Gehäuses 10 des Gassack-Rückhaltemoduls gemäß der zweiten Ausführungsform ist mit zwei Schraubaugen 80 versehen, die einstückig mit dem Gehäuse 10 ausgebildet sind. Dies ist besonders vorteilhaft, wenn das Gehäuse 10 ausgehend von einem Strangpreßprofil hergestellt ist. In diese Schraubaugen 80 werden nach der Montage der Bodenplatte 70 und der Halteplatte 72 selbstschneidende Schrauben eingeschraubt, welche zusammen mit den Befestigungsbolzen 46 die Boden- bzw. die Halteplatte 70 bzw. 72 festlegen.

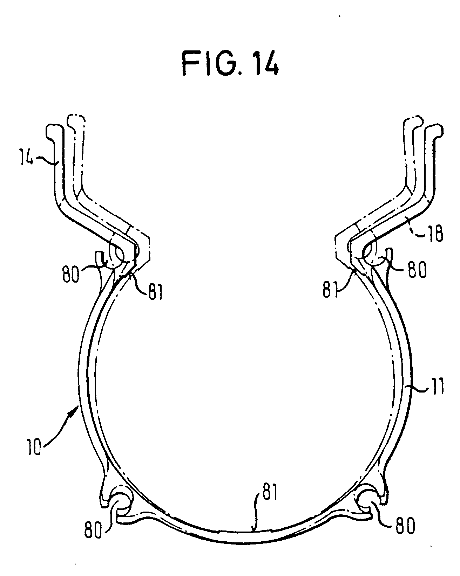

In Figur 14 ist eine Variante des in Figur 12 dargestellten Gehäuses gezeigt. Die Variante gemäß Figur 14 unterscheidet sich von dem Gehäuse gemäß Figur 12 dadurch, daß die Schraubaugen 80 außerhalb des Gehäuses und nicht mehr in dessen Innenraum angeordnet sind. Ferner sind bei der Variante gemäß Figur 14 im Inneren des Gehäuses erhabene Anlageflächen 81 vorgesehen, an denen die Druckgasquelle 12 in Anlage gelangt, wenn sie in dem Gehäuse 10 eingespannt ist.

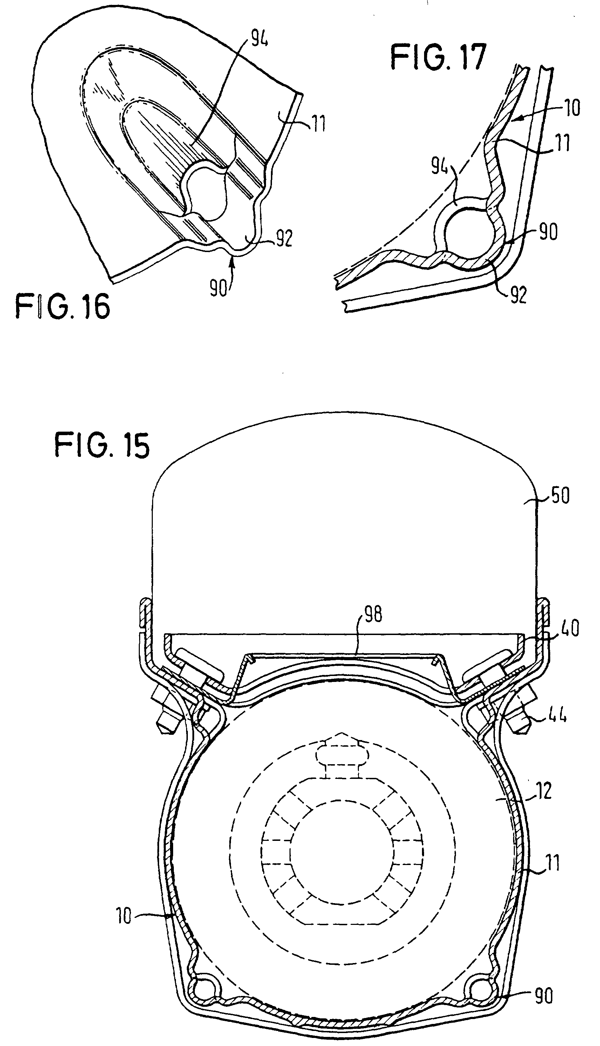

In den Figuren 15 bis 17 ist schematisch ein Gassack-Rückhaltemodul gemäß der zweiten Ausführungsform mit einer zweiten Variante des Gehäuses 10 dargestellt. Dieses Gehäuse 10 ist ausgehend von einem Blechbiegeteil hergestellt. Aufgrund der besseren Verformbarkeit und Bearbeitbarkeit eines Blechbiegeteils gegenüber einem Strangpreßprofil ergeben sich weitere konstruktive Möglichkeiten für die Befestigung der Bodenplatte 70 und der Halteplatte 72 sowie für die Klemmung zwischen dem Aufnahmeteil 11 und der Druckgasquelle 12. Der Aufnahmeteil 11 ist bei dieser Variante des Gehäuses 10 mit Widerlagern 90 versehen, deren Funktion derjenigen der Schraubaugen 80 von Fig. 13 entspricht. Die Widerlager sind jeweils durch zwei kreisabschnittsförmige Materiallaschen 92 bzw. 94 gebildet, die in der Verschraubungsrichtung gesehen hintereinander liegen und relativ zu dieser in zueinander entgegengesetzten Richtungen aus der Materialebene herausgebogen sind.

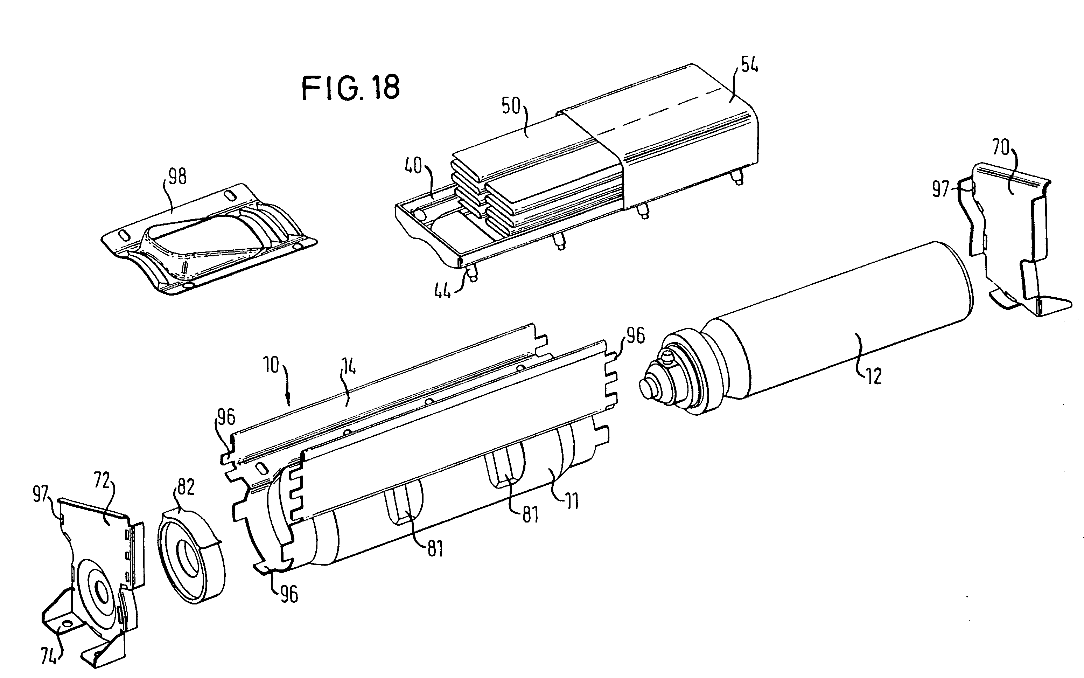

In den Figuren 18 bis 25 ist schematisch ein erfindungsgemäßes Gassack-Rückhaltemodul gemäß der zweiten Ausführungsform mit einer dritten Variante des Gehäuses 10 dargestellt. Auch bei dieser Variante ist das Gehäuse 10 ausgehend von einem Blechbiegeteil hergestellt. An dem Aufnahmeteil 11 sind Sicken 81 vorgesehen, an denen die Druckgasquelle 12 in Anlage gelangt, wenn sie in dem Gehäuse 10 eingespannt ist. Für die Positionierung der Druckgasquelle relativ zum Gehäuse ist an dem kopfseitigen Ende der Druckgasquelle 12 eine Distanzscheibe 82 angeordnet, die mit Vorsprüngen für eine eindeutige Winkelpositionierung relativ zum Aufnahmeteil 11 versehen ist und in gleicher Weise wie die Druckgasquelle 12 durch ein Klemmwirkung gehalten wird. Diese Distanzscheibe stabilisiert den Aufnahmeteil 11, verbessert die Festlegung des Gassacks am Befestigungsrahmen 40 und dient als Dichtung auf dieser Seite der Druckgasquelle 12.

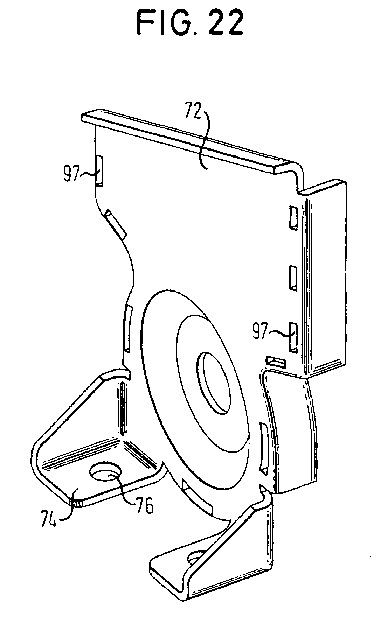

Anstelle von Schrauben zur Befestigung der Bodenplatte 70 bzw. der Halteplatte 72 können Biegelaschen 96 verwendet werden, die an den Stirnseiten des Aufnahmeteils 11 vorgesehen sind, in der Bodenplatte 70 bzw. der Halteplatte 72 gebildete Öffnungen 97 (siehe auch Figur 22) durchqueren und auf der Außenseite der Boden- bzw. der Halteplatte 70 bzw. 72 umgebogen sind, so daß diese festgelegt sind.

Bei der Montage der zweiten Baugruppe an der ersten Baugruppe kann zwischen dem Befestigungsrahmen 40 und dem Aufnahmeteil 11 ein Ablenkblech 98 im Bereich des kopfseitigen Endes der Druckgasquelle 12 eingesetzt werden. Dieses Ablenkblech 98 verhindert, daß der Gassack 50 durch direkte Anströmung von dem von der Druckgasquelle 12 freigesetzten Druckgas beschädigt wird.

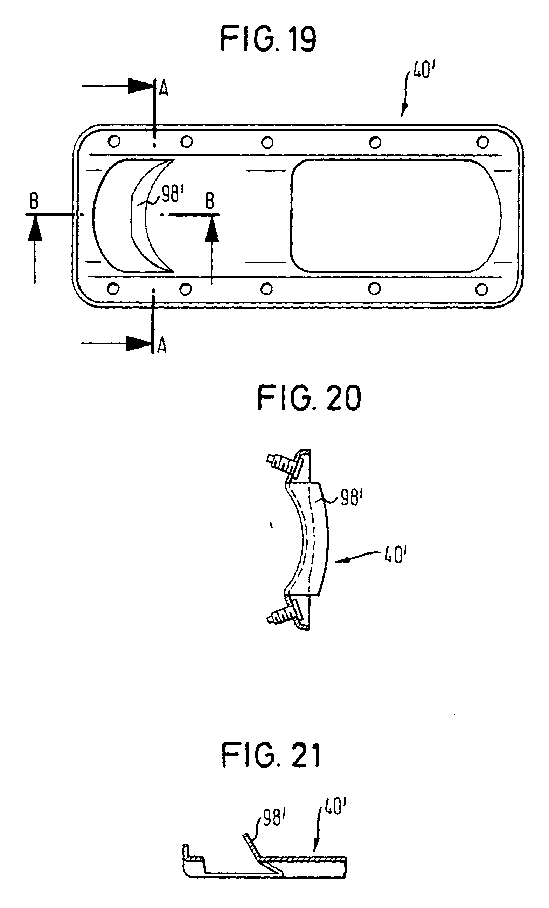

In den Figuren 19 bis 21 ist eine Variante dargestellt, die anstelle des Ablenkblechs 98 und des Befestigungsrahmens 40 verwendet werden kann, die in Figur 18 zu sehen sind. Bei dieser Variante ist der Befestigungsrahmen 40' einstückig mit einem Ablenkfortsatz 98' versehen. Auch mit dem Ablenkfortsatz 98' kann der Gassack 50 vor einer direkten Anströmung durch das Druckgas geschützt werden. Weiterhin ist es in Abhängigkeit von der jeweiligen Ausgestaltung des Ablenkfortsatzes 98', von dessen Neigung und dessen Länge möglich, das Einströmen des von der Druckgasquelle 12 freigesetzten Druckgases zu lenken, so daß sich der Gasstrom besser im Gassack verteilt und sich der Gassack während des Entfaltungsvorgangs symmetrischer entfaltet und besser vor dem Fahrzeuginsassen positioniert. Ferner wird eine ungleichmäßige Beanspruchung des Gewebes des Gassacks verhindert.

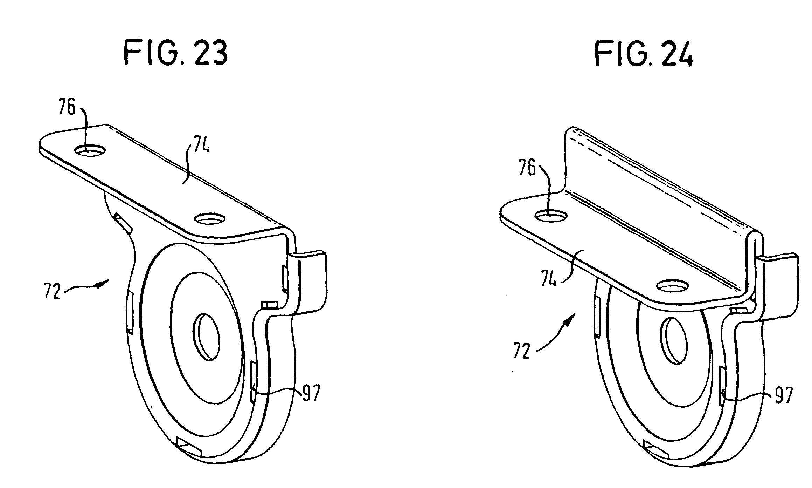

In den Figuren 23 und 24 ist eine Variante der Halteplatte dargestellt, die anstelle der Halteplatte 72 verwendet werden kann, die in den Figuren 18 und 22 gezeigt ist. Bei diesen Varianten ist der Flansch 74 zur Befestigung des Gassack-Rückhaltemoduls nicht an der unteren Seite der Halteplatte angeordnet, sondern an der oberen Seite. Mit den verschiedenen Gestaltungen kann eine Anpassung an die unterschiedlichen Gegebenheiten bei der Montage des Gassack-Rückhaltemoduls im Fahrzeug erfolgen.

## Patentansprüche

1. Gassack-Rückhaltemodul mit einem Gehäuse (10), einer in diesem angeordneten Aufblasvorrichtung (12), die nach Aktivierung ein Volumen von Druckgas bereitstellt, sowie einem gefalteten Gassack (50), der einen an dem Gehäuse (10) festgelegten, eine Einblasöffnung umgebenden Befestigungsabschnitt aufweist, wobei das Gehäuse (10) einen allgemein wannenartigen, zum Gassack und stirnseitig geöffneten Aufnahmeteil (11) aufweist, in den die Aufblasvorrichtung (12) in axialer Richtung eingeschoben ist, sowie zwei in axialer Richtung verlaufende, sich ausgehend von dem Aufnahmeteil (11) nach außen erstreckende Befestigungsstreifen (14),
wobei der Befestigungsabschnitt des Gassacks (50) mit einem Befestigungsrahmen (40) versehen ist,
wobei der Befestigungsrahmen (40) zwischen den Befestigungsstreifen (14) aufgenommen ist und
wobei das Gehäuse (10) ausgehend von einem Blechbiegeteil hergestellt ist,
dadurch gekennzeichnet,
daß die Aufblasvorrichtung einen flaschenartigen Druckgasbehälter (12) aufweist und
daß der Aufnahmeteil (11) stirnseitig mit Biegelaschen (96) versehen ist.

2. Gassack-Rückhaltemodul nach Anspruch 1, dadurch gekennzeichnet, daß die dem Boden des Druckgasbehälters (12) zugewandte Stirnseite des Aufnahemteils (11) mittels einer Bodenplatte (70) verschlossen ist, wobei die Biegelaschen (96) des Aufnahmeteils (11) in der Bodenplatte (70) gebildete Öffnungen (97) durchqueren und auf der Außenseite der Bodenplatte (70) umgebogen sind.

3. Gassack-Rückhaltemodul nach Anspruch 1 oder 2. dadurch gekennzeichnet, daß die dem Kopf des Druckgasbehälters (12) zugewandte Stirnseite des Aufnahmeteils (11) mittels einer Halteplatte (72) verschlossen ist, die mit einem an die Form des Kopfes der Druckgasflasche (12) angepaßten Halteabsehnitt versehen ist, wobei die Biegelaschen (96) des Aufnahmeteils (11) in der Halteplatte (72) gebildete Öffnungen (97) durchqueren und auf der Außenseite der Halteplatte (72) umgebogen sind.

4. Gassack-Rückhaltemodul nach einem der vorhergehenden Ansprüche, dadurch gekennzeichnet, daß der Aufnahmeteil (11) einen kreisförmigen Querschnitt hat.

5. Gassack-Rückhaltemodul nach einem der Ansprüche 1 bis 3, dadurch gekennzeichnet, daß der Aufnahmeteil (11) einen polygonartigen Querschnitt hat.

6. Gassack-Rückhaltemodul nach einem der vorhergehenden Ansprüche, dadurch gekennzeichnet. daß der Druckgasbehälter (12) einen kreisförmigen Querschnitt hat.

7. Gassack-Rückhaltemodul nach einem der vorhergehenden Ansprüche, dadurch gekennzeichnet, daß der Druckgasbehälter (12) und der Aufnahmeteil (11) so dimensioniert sind, daß der Druckgasbehälter (12) mit Preßsitz in dem Aufnahmeteil (11) gehalten ist.

8. Gassack-Rückhaltemodul nach einem der vorhergehenden Ansprüche, dadurch gekennzeichnet, daß der Aufnahmeteil (11) und der Befestigungsrahmen (40) mit dem Druckgasbehälter (12) nach Art einer Rohrschelle zusammenwirken, so daß eine Spannwirkung erzeugt ist, durch welche der Druckgasbehälter (12) fest in dem Aufnahmeteil (11) gehalten ist.

9. Gassack-Rückhaltemodul nach einem der vorhergehenden Ansprüche, dadurch gekennzeichnet, daß das Gehäuse (10) mit dem Druekgasbehälter (12) einerseits und der Befestigungsrahmen (40) mit dem gefalteten Gassack (50) andererseits zwei vormontierte Baugruppen bilden.

10. Gassack-Rückhaltemodul nach Anspruch 2 und 3, dadurch gekennzeichnet, daß die Bodenplatte (70) bzw. die Halteplatte (72) mit einem Flansch (74) zur Montage des Gassack-Rückhaltemoduls versehen ist.

11. Gassack-Rückhaltemodul nach einem der vorhergehenden Ansprüche, dadurch gekennzeichnet, daß der Aufnahmeteil (11) mit in seinen Innenraum hervorstehenden Sicken (81) versehen ist.

12. Gassack-Rückhaltemodul nach einem der vorhergehenden Ansprüche, dadurch gekennzeichnet, daß an dem Aufnahmeteil (11) mindestens ein Widerlager (90) für eine selbstschneidende Schraube vorgesehen ist, das gebildet ist durch zwei kreisabschnittsförmige Materiallaschen (92, 94), die in der Verschraubungsrichtung gesehen hintereinander liegen und relativ zu dieser Verschraubungsrichtung in zueinander entgegengesetzten Richtungen aus der Materialebene herausgebogen sind.

13. Gassack-Rückhaltemodul nach einem der Ansprüche 2 und 3, dadurch gekennzeichnet, daß der Befestigungsrahmen (40) mit Befestigungsbolzen (46) versehen ist, die in der Bodenplatte (70) bzw. der Halteplatte (72) gebildete Öffnungen durchqueren.

14. Gassack-Rückhaltemodul nach einem der vorhergehenden Ansprüche, dadurch gekennzeichnet, daß der Befestigungsrahmen (40) mit Befestigungsbolzen (44) versehen ist, welche in dem Befestigungsabschnitt des Gassacks (50) gebildete Öffnungen durchqueren.

15. Gassack-Rückhaltemodul nach Anspruch 14, dadurch gekennzeichnet, daß der Gassack (50) ein im wesentlichen rechteckiges Fixierungsteil (54) aufweist, dessen eine Längsseite fest mit dem Gassack (50) im Bereich des Befestigungsabschnittes verbunden ist, dessen sich an diese erste Längsseite anschließender Mittelabschnitt über den zusammengefalteten Gassack (50) geführt ist und dessen sich an den Mittelabschnitt anschließende und zu der ersten Längsseite entgegengesetzte zweite Längsseite an dem Befestigungsrahmen (40) mittels Laschen (56) festgelegt ist, die entlang der zweiten Längsseite angeordnet sind und Öffnungen (58) aufweisen, in die ein Teil der Befestigungsbolzen (44) eingreift, wobei der Mittelabschnitt mit einer Perforationslinie (60) versehen ist, welche von dem Gassack (50) bei seinem Entfalten aufgerissen wird.

16. Gassack-Rückhaltemodul nach einem der vorhergehenden Ansprüche, dadurch gekennzeichnet, daß zwischen dem Befestigungsrahmen (40) und dem Aufnahmeteil (11) auf der dem Kopf des Druckgasbehälters (12) zugewandten Seite ein Ablenkblech (98) angeordnet ist.

17. Gassack-Rückhaltemodul nach einem der Ansprüche 1 bis 15, dadurch gekennzeichnet, daß der Befestigungsrahmen (40') mit einem Ablenkfortsatz (98') versehen ist.

18. Gassack-Rückhaltemodul nach Anspruch 3, dadurch gekennzeichnet, daß zwischen der Halteplatte (72) und der Druckgasquelle (12) eine Distanzscheibe (82) angeordnet ist, die mit Vorsprüngen zur eindeutigen Winkelpositionierung relativ zu dem Aufnahmeteil (11) versehen ist.

## Claims

1. A gas bag restraint module having a housing (10), an inflator (12) located in the latter, said inflator providing a volume of pressurized gas after activation, and having a folded gas bag (50) which has an attachment section fixed to the housing (10) and surrounding an inflation aperture, the housing (10) having a generally trough-shaped accommodation part (11) which is open toward the gas bag and at the front face and into which the inflator (12) is axially inserted, as well as two axially extending attachment strips (14) which run outwards from the accommodation part (11),
the attachment section of the gas bag (50) being provided with an attachment frame (40);
the attachment frame (40) being accommodated between the attachment strips (14), and
the housing (10) being manufactured from a bent plate component,
characterised in that
the inflator includes a bottle-shaped pressurized gas container (12), and
the accommodation part (11) is provided with bending tabs (96) on the end faces.

2. The gas bag restraint module according to Claim 1, characterised in that the end face of the accommodation part (11) facing the bottom of the pressurized gas container (12) is sealed by means of a base plate (70), the bending tabs (96) of the accommodation part (11) passing through openings (97) formed in the base plate (70), and being bent over on the outside of the base plate (70).

3. The gas bag restraint module according to Claim 1 or 2, characterised in that the end face of the accommodation part (11) facing the head of the pressurized gas container (12) is sealed by means of a retaining plate (72) which is provided with a retaining section adapted to the shape of the head of the pressurized gas cylinder (12), the bending tabs (96) of the accommodation part (11) passing through openings (97) formed in the retaining plate (72), and being bent over on the outside of the retaining plate (72).

4. The gas bag restraint module according to any of the preceding Claims, characterised in that the accommodation part (11) has a circular cross-section.

5. The gas bag restraint module according to any of Claims 1 to 3, characterised in that the accommodation part (11) has a polygonal cross-section.

6. The gas bag restraint module according to any of the preceding Claims, characterised in that the pressurized gas container (12) has a circular cross-section.

7. The gas bag restraint module according to any of the preceding Claims, characterised in that the pressurized gas container (12) and the accommodation part (11) are so dimensioned that the pressurized gas container (12) is held in the accommodation part (11) by press fit.

8. The gas bag restraint module according to any of the preceding Claims, characterised in that the accommodation part (11) and the attachment frame (40) interact with the pressurized gas container (12) like a pipe clip to produce a clamping effect by means of which the pressurized gas container (12) is held firmly in the accommodation part (11).

9. The gas bag restraint module according to any of the preceding Claims, characterised in that the housing (10) with the pressurized gas container (12) on the one hand and with the attachment frame (40) with the folded gas bag (50) on the other hand form two preassembled assemblies.

10. The gas bag restraint module according to Claims 2 and 3, characterised in that the base plate (70) and the retaining plate (72) are provided with a flange (74) for attaching the gas bag restraint module.

11. The gas bag restraint module according to any of the preceding Claims, characterised in that the accommodation part (11) is provided with beads (81) projecting into its interior.

12. The gas bag restraint module according to any of the preceding Claims, characterised in that the accommodation part (11) is provided with at least one buttress (90) for a self-tapping screw and which is formed from two brackets of material (92, 94) representing the segments of a circle, which brackets, as viewed in the direction of the thread, are located one behind the other and in relation to this direction are bent out of the plane of the material in opposite directions to each other.

13. The gas bag restraint module according to either of Claims 2 and 3, characterised in that the attachment frame (40) is provided with attachment bolts (46) which pass through openings formed in the base plate (70) and the retaining plate (72).

14. The gas bag restraint module according to any of the preceding Claims, characterised in that the attachment frame (40) is provided with attachment bolts (44) which pass through openings formed in the attachment section of the gas bag (50).

15. The gas bag restraint module according to Claim 14, characterised in that the gas bag (50) has an essentially rectangular fixing part (54), one long side of which is firmly connected to the gas bag (50) in the region of the attachment section, the middle section of which, adjoining this first long side, is passed over the folded gas bag (50), and the second long side of which, adjoining the middle section and opposite the first long side, is fixed to the attachment frame (40) by means of projections (56), which are located along the second long side and have openings (58) into which part of the attachment bolts (44) project, with the middle section being provided with a perforated line (60) which is torn by the gas bag (50) when it unfolds.

16. The gas bag restraint module according to any of the preceding Claims, characterised in that a deflection plate (98) is located between the attachment frame (40) and the accommodation part (11) on the side facing the head of the pressurized gas container (12).

17. The gas bag restraint module according to any of the Claims 1 to 15, characterised in that the attachment frame (40') is provided with a deflection extension (98').

18. The gas bag restraint module according to Claim 3, characterised in that a spacer washer (82) is located between the retaining plate (72) and the pressurized gas source (12), said washer being provided with projections for unequivocal angular positioning in relation to the accommodation part (11) .

## Revendications

1. Module de retenue de coussin à gaz comprenant un boîtier (10), un dispositif de gonflage (12) agencé dans celui-ci et qui, après activation, fournit un volume de gaz comprimé, ainsi qu'un coussin à gaz (50) plié qui présente une portion de fixation qui est assujettie au boîtier (10) et qui entoure un orifice de gonflage, le boîtier (10) présentant une partie de logement (11) en forme de bac qui est ouverte vers le coussin à gaz et du côté frontal, dans laquelle le récipient de gaz comprimé (12) est enfilé en direction axiale, ainsi que deux bandes de fixation (14) s'étendant en direction axiale et orientées vers l'extérieur à partir de la partie de logement (11),
la portion de fixation du coussin à gaz (50) étant pourvue d'un cadre de fixation (40),
le cadre de fixation (40) étant reçu entre les bandes de fixation (14) et
le boîtier (10) étant fabriqué à partir d'une pièce en tôle pliée,
caractérisé en ce que
le dispositif de gonflage présente un récipient de gaz comprimé (12) en forme de bouteille et
en ce que la partie de logement (11) est pourvue de languettes pliables (96) sur ses faces frontales.

2. Module de retenue de coussin à gaz selon la revendication 1, caractérisé en ce que la face frontale de la partie de logement (11), qui est tournée vers le fond du récipient de gaz comprimé (12), est fermée au moyen d'une plaque de fond (70), les languettes pliables (96) de la partie de logement (11) passant à travers des ouvertures (97) pratiquées dans la plaque de fond (70) et étant rabattues sur la face extérieure de la plaque de fond (70).

3. Module de retenue de coussin à gaz selon la revendication 1 ou 2, caractérisé en ce que la face frontale de la partie de logement (11), qui est tournée vers la tête du récipient de gaz comprimé (12), est fermée au moyen d'une plaque de retenue (72) qui est munie d'une portion de retenue épousant la forme de la tête de la bouteille de gaz comprimé (12), les languettes pliables (96) de la partie de logement (11) passant à travers des ouvertures (97) pratiquées dans la plaque de retenue (72) et étant rabattues sur la face extérieure de la plaque de retenue (72).

4. Module de retenue de coussin à gaz selon l'une quelconque des revendications précédentes, caractérisé en ce que la partie de logement (11) possède une section transversale circulaire.

5. Module de retenue de coussin à gaz selon l'une quelconque des revendications précédentes, caractérisé en ce que la partie de logement (11) possède une section transversale polygonale.

6. Module de retenue de coussin à gaz selon l'une quelconque des revendications précédentes, caractérisé en ce que le récipient de gaz comprimé (12) possède une section transversale circulaire.

7. Module de retenue de coussin à gaz selon l'une quelconque des revendications précédentes, caractérisé en ce que le récipient de gaz comprimé (12) et la partie de logement (11) sont dimensionnés de façon que le récipient de gaz comprimé (12) soit maintenu avec un ajustement serré dans la partie de logement (11).

8. Module de retenue de coussin à gaz selon l'une quelconque des revendications précédentes, caractérisé en ce que la partie de logement (11) et le cadre de fixation (40) coopèrent avec le récipient de gaz comprimé (12) à la façon d'un collier de façon à créer un effet de serrage qui maintient fermement le récipient de gaz comprimé (12) dans la partie de logement (11).

9. Module de retenue de coussin à gaz selon l'une quelconque des revendications précédentes, caractérisé en ce que d'une part, le boîtier (10) et le récipient de gaz comprimé (12) et, d'autre part, le cadre de fixation (40) et le coussin à gaz plié (50) forment deux ensembles prémontés.

10. Module de retenue de coussin à gaz selon les revendications 2 et 3, caractérisé en ce que la plaque de fond (70) et la plaque de retenue (72) sont pourvues chacune d'une bride (74) pour monter le module de retenue de coussin à gaz.

11. Module de retenue de coussin à gaz selon l'une quelconque des revendications précédentes, caractérisé en ce que la partie de logement (11) est pourvue de moulures (81) faisant saillie dans sa cavité intérieure.

12. Module de retenue de coussin à gaz selon l'une quelconque des revendications précédentes, caractérisé en ce qu'il est prévu sur la partie de logement (11) au moins une contre-butée (90) qui est destinée à une vis autotaraudeuse et qui est formée par deux languettes de matériau (92, 94) en forme de segments de cercle qui sont disposées l'une derrière l'autre, vu dans le sens de vissage, et qui, par rapport audit sens de vissage, sont incurvées hors du plan de matériau dans des directions opposées.

13. Module de retenue de coussin à gaz selon les revendications 2 et 3, caractérisé en ce que le cadre de fixation (40) est pourvu de goujons de fixation (46) qui passent à travers des ouvertures pratiquées dans la plaque de fond (70) et dans la plaque de retenue (72).

14. Module de retenue de coussin à gaz selon l'une quelconque des revendications précédentes, caractérisé en ce que le cadre de fixation (4) est pourvu de goujons de fixation (44) qui passent à travers des ouvertures pratiquées dans la portion de fixation de fixation du coussin à gaz (50).

15. Module de retenue de coussin à gaz selon la revendication 14, caractérisé en ce que le coussin à gaz (50) présente une partie de blocage (54) sensiblement rectangulaire dont un grand côté est solidarisé au coussin à gaz (50) dans la zone de la portion de fixation, dont la portion centrale faisant suite audit premier long côté passe par le coussin à gaz (50) plié, et dont le deuxième grand côté faisant suite à la portion centrale est assujetti au cadre de fixation (40) au moyen de languettes (56) qui sont agencées le long du deuxième grand côté et qui présentent des ouvertures (58) dans lesquelles s'engage une partie des goujons de fixation (44), la portion centrale étant pourvue d'une ligne de perforations (60) qui est déchirée par le coussin à gaz (50) lors de son déploiement.

16. Module de retenue de coussin à gaz selon l'une quelconque des revendications précédentes, caractérisé en ce qu'un déflecteur en tôle (98) est agencé entre le cadre de fixation (40) et la partie de logement (11) sur la face tournée vers la tête du récipient de gaz comprimé (12).

17. Module de retenue de coussin à gaz selon l'une quelconque des revendications 1 à 15, caractérisé en ce que le cadre de fixation (40') est pourvu d'un prolongement déflecteur (98').

18. Module de retenue de coussin à gaz selon la revendication, caractérisé en ce que, entre la plaque de retenue (72) et la source de gaz comprimé (12), est disposé un disque d'écartement (82) qui est pourvu de saillies permettant de le positionner correctement par rapport à la partie de logement (11).
